# EUROPEAN PATENT SPECIFICATION

(11) **EP 3 738 444 B1**
(45) Date of publication and mention of the grant of the patent: **15.11.2023**
(21) Application number: 19738577.6
(22) Date of filing: 09.01.2019
(51) Int. Cl.: A23L 3/10, A23L 27/16, A23L 27/24, A23L 27/50

(54) **INGREDIENT-CONTAINING LIQUID SEASONING IN HERMETICALLY SEALED CONTAINER**
ZUTATENHALTIGES FLÜSSIGES WÜRZMITTEL IN HERMETISCH VERSCHLOSSENEM BEHÄLTER
ASSAISONNEMENT LIQUIDE CONTENANT UN INGRÉDIENT DANS UN RÉCIPIENT HERMÉTIQUEMENT SCELLÉ

(30) Priority: 10.01.2018 JP 2018001788
(43) Date of publication of application: 18.11.2020
(73) Proprietor: Mizkan Holdings Co., Ltd., Handa-shi, Aichi 475-8585 (JP); Mizkan Co., Ltd., Handa-shi, Aichi 475-8585 (JP)
(72) Inventor: KATSUKI Mao, Handa-shi, Aichi 475-8585 (JP); MIZUNO Tatsuya, Handa-shi, Aichi 475-8585 (JP)
(74) Representative: Mewburn Ellis LLP
(86) International application number: PCT/JP2019/000315
(87) International publication number: WO 2019/139027

(56) References cited:
- WO-A1-2019/009217
- JP-A- S 572 660
- JP-A- 2006 223 258
- JP-A- 2007 209 295
- JP-A- 2010 119 326
- JP-A- 2011 152 147
- JP-A- 2012 165 681
- JP-A- 2012 235 717
- JP-A- 2012 249 559
- JP-A- 2012 249 559
- JP-A- 2013 042 725
- JP-A- 2013 042 739
- JP-A- 2015 039 351
- JP-A- 2015 050 969
- JP-B1- 6 309 121

## Description

### Technical Field

The present invention relates to an ingredient-containing liquid seasoning in a hermetically sealed container, in which preferable fermentation feeling in its ingredient and entire seasoning is enhanced, the preferable fermentation feeling and food texture of the ingredient are not impaired even after cooking with heat, and satisfaction in eating of the ingredient is sufficient.

### Background Art

Conventionally, seasonings having various tastes or forms have been used in salads or prepared foods. Among others, in the case of a liquid seasoning containing ingredients such as grated vegetables or finely chopped vegetables in its seasoning liquid, since ingredients have previously been added into a seasoning liquid, time and effort for preparing ingredients separately, mixing them with a seasoning liquid, and cooking the resultant mixture, for example, by heating the mixture, can be saved. In addition, diversifying preferences of consumers are satisfied by varying ingredients.

Such an ingredient-containing liquid seasoning uses a fermented seasoning such as soy sauce and *miso* (soybean paste) along with its ingredient and has been designed to enhance the flavor and *umami* taste of the entire liquid seasoning by suppressing deterioration of the flavor of an ingredient caused by heat-mixing the ingredient and the fermented seasoning. For example, Patent Literature 1 describes a method for improving the flavor of vegetable granules and/or fruit juice through a production process of a seasoning containing vegetable granules and/or fruit juice, the production process including heating a mixture of raw soy sauce and a part of raw materials (dried vegetables or sugar) except 5'-nucleotide, subsequently mixing 5'-nucleotide and the rest of the raw materials, and heating the resultant mixture again in order to suppress decomposition and elimination of 5'-nucleotide, which is an *umami* component, caused by a phosphatase contained in raw soy sauce. In addition, Patent Literature 2 describes adding an organic acid, a vegetable fat/oil, and a vegetable protein hydrolysate at certain amounts based on materials peculiar to kimchi such as garlic and red pepper to obtain a liquid seasoning for cooking with heat which has fermentation feeling and ripening feeling peculiar to kimchi and which has balanced flavor. However, these methods cannot impart preferable fermentation feeling to ingredients in their seasoning liquids and the entire seasonings thereof, and satisfaction in eating of ingredients is not sufficiently felt.

JP2007 209295 A describes a vegetable particle-containing liquid seasoning (paragraph [0001]). The vegetable particle-containing liquid seasoning was obtained by the following steps: adding 40 kg of dried onions having an average particle diameter of 3 mm to a liquid seasoning (total amount of 976.5 kg) including 20 kg of brewed vinegar and 15 kg of miso, heating the contents to 50°C while stirring uniformly, heat-sterilizing and subsequently cooling the contents, then packing the contents in a PET bottle and hermetically sealing the bottle.

### Citation List

### Patent Literature

Patent Literature 1: JP Patent Publication (Kokai) No. 2013-99306
Patent Literature 2: JP Patent Publication (Kokai) No. 2016-13105

### Summary of Invention

### Technical Problem

An object of the present invention is to provide an ingredient-containing liquid seasoning in which preferable fermentation feeling in its ingredient and entire seasoning is enhanced, the preferable fermentation feeling and food texture of the ingredient are not impaired even after cooking with heat, and satisfaction in eating of the ingredient is sufficient.

### Solution to Problem

The present inventors conducted intensive studies to achieve the above-described object. As a result, the present inventors have found that, in an ingredient-containing liquid seasoning, by virtue of heating a seasoning liquid, to which a vinegar and a fermented product containing a lipid are added, within a hermetically sealed container along with a dried ingredient, a flavor originating from the fermented product do not evaporate from the seasoning liquid and remains in the seasoning liquid, and fermentation feeling is enhanced in the ingredient and in the entire seasoning and further found that fermentation feeling and food texture of the ingredient are impaired neither by a heat load during cooking with heat nor by a physical load due to stirring, and satisfaction in eating of the ingredient is sufficient; and the present invention has been completed thereby.

The "fermentation feeling" herein means feeling of ripening feeling peculiar to fermented food such as kimchi, fresh sourness, and *umami,* for example. In addition, "satisfaction in eating of ingredients" means satisfaction in both of original food texture of ingredients and fermentation flavor of the ingredients.

The present invention is defined by the claims.

The present invention discloses an ingredient-containing liquid seasoning in a hermetically sealed container, comprising:
a dried ingredient selected from a dried vegetable, a dried product of a fruit, seed, nut, bean, seafood, meat or processed meat product and seaweed, and a combination thereof;
a lipid-containing fermented product selected from doubanjiang, gochu-jang, tianmianjiang, miso, cheese, fermented butter, anchovy, and a combination thereof; and
a vinegar,
wherein
a content ratio between the ingredient and the lipid-containing fermented product is 95:1 to 5:1 by mass ratio,
a content of the ingredient is 10% to 80% by mass of the entire seasoning in terms of wet weight;
and
a long side length of the ingredient after swelling in a seasoning liquid is 15 to 60 mm.

In an embodiment, the ingredient-containing liquid seasoning in a hermetically sealed container, has a lipid content in the lipid-containing fermented product is 1% to 80% by mass based on a total amount of the lipid-containing fermented product.

The present invention also discloses the use of the ingredient-containing liquid seasoning in a hermetically sealed container for cooking with heat.

The present invention also discloses a method for producing an ingredient-containing liquid seasoning in a hermetically sealed container, the method comprising following steps:
(a) a step of putting a dried ingredient selected from a dried vegetable, a dried product of a fruit, seed, nut, bean, seafood, meat or processed meat product and seaweed, and a combination thereof into a container capable of being hermetically sealed so that a content of the ingredient is 10% to 80% by mass of the entire seasoning in terms of wet weight, subsequently adding a seasoning liquid including a vinegar and a lipid-containing fermented product selected from doubanjiang, gochu-jang, tianmianjiang, miso, cheese, fermented butter, anchovy, and a combination thereof, and hermetically sealing the container, wherein a long side length of the dried ingredient after swelling in the seasoning liquid is 15 to 60 mm;
(b) a step of heat treating the hermetically sealed container filled with the ingredient and the seasoning liquid at 60°C to 100°C for 20 to 120 minutes without stirring; and
(c) a step of leaving or cooling the hermetically sealed container after heat treatment until a temperature of the seasoning liquid becomes ordinary temperature.

### Advantageous Effects of Invention

According to the present invention, an ingredient-containing liquid seasoning in which fermentation feeling in its ingredient and entire seasoning is enhanced, original food texture of the ingredient is impaired neither by a heat load during cooking with heat nor by a physical load due to stirring, and satisfaction in eating of the ingredient is sufficient is provided. Since an ingredient of the ingredient-containing liquid seasoning of the present invention absorbs a lipid originating from a fermented product, the ingredient-containing liquid seasoning of the present invention retains a flavor originating from the fermented product even during cooking with heat and is suitable for use in cooking with heat.

### Description of Embodiments

### 1. Ingredient-containing liquid seasoning in hermetically sealed container

The ingredient-containing liquid seasoning in a hermetically sealed container of the present invention (hereinafter, referred to as "the liquid seasoning of the present invention") comprises an ingredient, a lipid-containing fermented product, and a vinegar.

### (Ingredient)

In the liquid seasoning of the present invention, a dried ingredient is used because a wet ingredient becomes bulky, therefore is difficult to fill a hermetically sealed container, and easily absorbs a lipid originating from the fermented product in a seasoning liquid.

In the liquid seasoning of the present invention, the ingredient may have any shape such as a rectangular solid, cube (dice), spherical, or granular shape but preferably have a rectangular solid shape. The shape of the ingredient herein means a shape of the ingredient after swelling in a seasoning liquid.

In the liquid seasoning of the present invention, a "long side length" of the ingredient means a length of the ingredient after swelling in a seasoning liquid and is a value measured by sampling the ingredient from the liquid seasoning. In addition, in relation to the shape of the ingredient, the long side length corresponds to a length of the longest side in the case where the ingredient has a shape close to a rectangular solid shape or a cube (dice) shape, corresponds to a length of the longest diameter in the case where the ingredient has a shape close to a spherical or granular shape, and corresponds to the longest width in the case where the ingredient has another shape. In the liquid seasoning in an embodiment not part of the present invention, the long side length of the ingredient after swelling in a seasoning liquid is preferably 3 to 60 mm, more preferably 5 to 50 mm, still more preferably 7 to 40 mm, and most preferably 10 to 40 mm. When the long side length of the ingredient after swelling is less than 3 mm, original food texture of the ingredient is insufficient, and besides, fermentation feeling is not sufficiently felt in the ingredient and the entire seasoning and no satisfaction in eating is provided. In addition, when the long side length of the ingredient after swelling exceeds 60 mm, a seasoning liquid hardly permeates the ingredient, and fermentation feeling of the ingredient and the entire seasoning is unsatisfactory.

In the liquid seasoning of the present invention, the "content of the ingredient" means a content (in wet weight) of the ingredient after swelling in a seasoning liquid and is a ratio represented by mass% of a weight of the ingredient having a long side length of 15 to 60 mm to a weight of the entire liquid seasoning, with said ratio being obtained by sampling the ingredient after swelling in a seasoning liquid from the liquid seasoning and measuring the weight thereof as in the case of measuring the long side of the ingredient described above. The content of the ingredient in the liquid seasoning of the present invention is 10% to 80% by mass, preferably 15% to 75% by mass, more preferably 20% to 75% by mass, still more preferably 25% to 70% by mass, further preferably 25% to 65% by mass, and most preferably 40% to 65% by mass of the entire seasoning in terms of wet weight. When the content of the ingredient is less than 10% by mass in terms of wet weight, fermentation feeling is not sufficiently provided in the ingredient and the entire seasoning. In addition, when the content of the ingredient exceeds 80% by mass in terms of wet weight, sufficient fermentation feeling is not provided in the ingredient and the entire seasoning, and the workability in using the liquid seasoning for cooking is worsened when the amount of the seasoning liquid is too little.

The ingredient to be contained in the liquid seasoning of the present invention is a dried ingredient, the water content of the dried ingredient is preferably 10% by mass or less, more preferably 8% by mass or less, and still more preferably 5% by mass or less from the viewpoint of preventing excess water from transferring to a seasoning liquid.

The above-described dried ingredient may also be prepared by mixing a raw ingredient before drying with sugar, or by immersing a raw ingredient before drying in a sugar-containing solution, followed by heat-mixing. Specifically, examples of the sugar include glucose, fructose, sucrose, lactose, and starch hydrolysate, and two or more types thereof may also be used. The amount of the sugar to be added, mixing time, the concentration of sugar in the case of immersing a raw ingredient in a sugar-containing solution, the temperature and time for the heat-mixing operation, and the temperature and time for the subsequent drying operation may be arbitrarily selected depending on the type, size, and the like of the ingredient. However, the amount of the sugar to be added in the case of mixing a raw ingredient with the sugar is preferably 5% to 30% by mass based on the mass of the dried ingredient, the concentration of sugar in the case of immersing a raw ingredient in a sugar-containing solution is preferably 5% to 30% by mass, and the conditions for the heat-mixing in the solution are preferably a temperature of 50°C to 80°C and a period of time of 10 minutes to 12 hours.

Moreover, the above-described dried ingredient may also be produced by heat-mixing a cut ingredient in a calcium salt solution and subsequently drying it. The concentration of the calcium salt solution, the temperature and time for the heat-mixing operation, and the temperature and time for the subsequent drying operation may be arbitrarily selected depending on the type, size, and the like of the ingredient. Specifically, the dried ingredient may be produced by stirring a cut ingredient in an aqueous solution, which is prepared by dissolving a calcium salt such as calcium chloride, calcium lactate, or calcium acetate in water to have a concentration of 0.5% to 5% by mass, at 50°C to 80°C for 1 to 120 minutes, subsequently separating the ingredient from the treatment solution to remove liquid, and then drying the resultant ingredient at 65°C to 80°C for 3 to 12 hours. The above-described calcium aqueous solution may also contain sugar such as glucose, fructose, sucrose, lactose, or starch hydrolysate in an amount of 5% to 30% by mass.

The above-described dried ingredient can be produced by cutting a raw ingredient to a predetermined size and then drying it, or by drying a raw ingredient and then cutting it to a predetermined size. Examples of the drying method include hot air drying, freeze drying, vacuum heat drying, microwave drying, sun drying, and natural drying.

In the case where the ingredient is a vegetable, although the type of the vegetable is not particularly limited, the vegetable is preferably one that is eaten after cooking with heat, and examples thereof include onions, cabbages, Chinese cabbages, carrots, green bell peppers, radishes, radish leaves, beets, lotus roots, burdocks, green onions, Japanese basil leaves, celeries, parsleys, bell peppers, tomatoes, cucumbers, corns (sweet corns), cauliflowers, eggplants, potatoes, sweet potatoes, taros, yams, and pumpkins. Among them, onions, cabbages, Chinese cabbages, carrots, green onions, celeries, and bell peppers are preferable, and onions, cabbages, Chinese cabbages, and carrots are more preferable. These vegetables can be used alone or in combination of two or more types.

Examples of the ingredient other than vegetables include dried products of fruits (lemon, *yuzu, sudachi,* lime, Mikan, grape fruit, apple, pineapple, peach, grape, strawberry, pear, banana, melon, kiwi, cassis, acerola, blueberry, apricot, guava, plum, mango, papaya, lychee, etc.), seeds and nuts (almond, peanut, pine nut, corn, coconut, soybean, etc.), mushrooms (*shimeji* mushroom, *shiitake* mushroom, western mushroom, king oyster mushroom, *maitake* mushroom, etc.), beans (soybean, pea, lentil, chickpea, Egyptian bean, etc.), seafood (bonito, tuna, sardine, squid, shrimp, clam, scallop, mussel, etc.), meat or processed meat products (beef, chicken, pork, ham, bacon, sausage, etc.), and seaweeds (*Hijiki* seaweed, brown seaweed, kelp, etc.), and eggs. These ingredients can be used alone or in combination of two or more types.

### (Lipid-containing fermented product)

The "lipid-containing fermented product" used in the liquid seasoning of the present invention is a lipid-containing fermented product selected from doubaniiang, gochu-iang, tianmianiiang, miso, cheese, fennented butter, anchovy, and a combination thereof.

In any other embodiments, not part of the present invention, the lipid-containing fermented product may be any of a fermented plant product, a fermented milk product, and a fermented seafood product as long as it contains a predetermined amount of a lipid. The fermented plant product is a product obtained by fermenting and ripening a raw plant material such as cereals (rice, barley, wheat, etc.), beans (soybean, red bean, etc.), and vegetables and fruits (Chinese cabbage, radish, etc.) with a microorganism, and examples thereof include various kinds of jiang such as doubanjiang (Chinese chili bean paste), gochu-jang (Korean red chili paste), doenjang (Korean soybean paste), tianmianjiang (Chinese sweet wheat paste), XO jiang (XO sauce, a seafood sauce), douchiiang (fermented black soybean paste), and zhimajiang (roasted sesame paste), and *miso.* Examples of *miso* herein include barley *miso,* rice *miso,* bean *miso,* and mixed *miso* as well as *aka miso* (dark brown *miso*)*, shiro miso* (white *miso*)*,* and *tanshoku miso* (light colored *miso*)*,* which are named based on the color difference caused by the production method thereof. In addition, the fermented milk product is a product obtained by inoculating a lactic acid bacterium or the like into a raw milk material and fermenting the raw milk material, and examples thereof include cheese, yogurt, and fermented butter. The fermented seafood product is a product obtained by fermenting seafood with a microorganism, and examples thereof include anchovy, dried and smoked bonito, and salted seafood. These lipid-containing fermented products may be used alone as a single type, or may also be used in any given combination of two or more types at any given ratio.

A lipid content in the above-described lipid-containing fermented product is preferably 1% to 80% by mass, more preferably 1.5% to 70% by mass, still more preferably 1.5% to 60% by mass, and most preferably 1.5% to 50% by mass based on a total amount of the lipid-containing fermented product from the viewpoint of enhancing fermentation feeling. When the lipid content in the lipid-containing fermented product is less than 1% by mass, sufficient fermentation feeling is not provided in the ingredient, and the lipid content in the lipid-containing fermented product exceeding 80% by mass is not preferable because the liquid seasoning becomes oily. In addition, when two or more types of the lipid-containing fermented products are used, a total lipid content may be within the above-described range. The lipid content can be measured by Soxhlet extraction method (Analytical Manual for Standard Tables of Food Composition in Japan).

In the liquid seasoning of the present invention, a "content ratio between the ingredient and the lipid-containing fermented product" is a mass ratio between the content (wet weight) of the ingredient after swelling in a seasoning liquid and a content of the lipid-containing fermented product. In the liquid seasoning of the present invention, the content ratio between the ingredient and the lipid-containing fermented product described above is preferably 95:1 to 5:1, more preferably 60:1 to 7:1, further preferably 40:1 to 9:1, still further preferably 30:1 to 9:1, and most preferably 28:1 to 9:1 in terms of mass ratio. When the content ratio between the ingredient and the lipid-containing fermented product falls within the above range, strength of fermentation feeling and satisfaction in eating of ingredients are sufficiently obtained. On the other hand, the content ratio between the ingredient and the lipid-containing fermented product out of the above range is not preferable because fermentation feeling weakens.

### (Vinegar)

Examples of the "vinegar" used in the liquid seasoning of the present invention include a brewed vinegar produced using a cereal such as rice or wheat or a fruit juice as a main raw material and a synthetic vinegar obtained by adding a seasoning such as sugar to a diluted solution of glacial acetic acid or acetic acid or by adding a brewed vinegar to a diluted solution of glacial acetic acid or acetic acid. Both of the brewed vinegar and the synthetic vinegar can be used in the present invention. Examples of the brewed vinegar include grain vinegar (rice vinegar, brown rice vinegar, black vinegar, *sake* lees vinegar, malt vinegar, adlay vinegar, soybean vinegar, etc.); fruit vinegar (apple vinegar, grape vinegar, lemon vinegar, *kabosu* vinegar, wine vinegar, balsamic vinegar, etc.); an alcoholic vinegar produced by acetic acid fermentation using ethanol as a raw material; Chinese vinegar; and Sherry vinegar. Examples of the synthetic vinegar include glacial acetic acid or acetic acid appropriately diluted with water. These vinegars may be used alone as a single type, or may also be used in any given combination of two or more types at any given ratio.

A content of the vinegar used in the liquid seasoning of the present invention is preferably set so as to achieve the pH range shown below and can be arbitrarily adjusted depending on the kind of the vinegar.

### (Other raw materials and the like)

In addition to the above-described raw materials, taste/flavor components such as sugar (including a high-intensity sweetener), common salt, an amino acid-based seasoning, a nucleic acid-based seasoning, an organic acid-based seasoning, a flavoring material, an *umami* seasoning, a liquor, a flavor, spicy seasoning, and spicy seasoning extract; additives such as a viscosity adjuster, a stabilizer, a coloring agent, and a calcium salt; and the like may be used in the liquid seasoning of the present invention to an extent that the effect of the present invention is not impaired. The contents of these components are not particularly limited, and can be appropriately determined depending on intended use.

Examples of the above-described sugar include sucrose, maltose, fructose, isomerized glucose syrup, glucose, starch syrup, dextrin, and sugar alcohols such as sorbitol, maltitol, and xylitol. These sugars may be used alone as a single type, or may also be used in any given combination of two or more types at any given ratio.

Examples of the above-described high-intensity sweetener include aspartame, acesulfame potassium, sucralose, neotame, licorice extract, stevia, and an enzyme-treated product thereof. These high-intensity sweeteners may be used alone as a single type, or may also be used in any given combination of two or more types at any given ratio.

The above-described common salt may be directly used, or may be a food product containing common salt. While the food product containing common salt is not particularly limited, examples thereof include soy sauce and soup stock. While the above-described soy sauce is not particularly limited, examples thereof include *koikuchi* (dark-colored) soy sauce, *usukuchi* (light-colored) soy sauce, white soy sauce, *tamari* (rich-tasting) soy sauce, and *saishikomi* (refermented) soy sauce. These soy sauce may be used alone as a single type, or may also be used in any given combination of two or more types at any given ratio.

Examples of the above-described amino acid-based seasoning include L-sodium glutamate, DL-alanine, glycine, L- or DL-tryptophan, L-phenylalanine, L- or DL-methionine, L-lysine, L-aspartic acid, sodium L-aspartate, and L-arginine. These amino acid-based seasonings may be used alone as a single type, or may also be used in any given combination of two or more types at any given ratio.

Examples of the above-described nucleic acid-based seasoning include disodium 5'-inosinate, disodium 5'-guanylate, disodium 5'-uridylate, disodium 5'-cytidylate, calcium 5'-ribonucleotide, and disodium 5'-ribonucleotide. These nucleic acid-based seasonings may be used alone as a single type, or may also be used in any given combination of two or more types at any given ratio.

Examples of the above-described organic acid-based seasoning include calcium citrate, trisodium citrate, potassium gluconate, sodium gluconate, succinic acid, monosodium succinate, disodium succinate, sodium acetate, potassium DL-hydrogen tartrate, potassium L-hydrogen tartrate, sodium DL-tartrate, sodium L-tartrate, potassium lactate, calcium lactate, sodium lactate, monosodium fumarate, and sodium DL-malate. These organic acid-based seasonings may be used alone as a single type, or may also be used in any given combination of two or more types at any given ratio. The combined use of two or more types of the organic acid-based seasonings is preferable because the tastes of both seasonings are synergistically enhanced.

Examples of the above-described flavoring material include soup stock from dried and smoked bonito, kelp soup stock, vegetable extract, bonito extract, kelp extract, seafood extract, meat extract, and fruit juice. These flavoring materials may be used alone as a single type, or may also be used in any given combination of two or more types at any given ratio.

Examples of the above-described *umami* seasoning include protein hydrolysate and yeast extract. These *umami* seasonings may be used alone as a single type, or may also be used in any given combination of two or more types at any given ratio.

Examples of the above-described liquor include refined *sake,* synthetic refined *sake, mirin* (sweet cooking rice wine), *Shochu* (traditional Japanese distilled spirit), wine, liqueur, and Chinese (Shaoxing) rice wine. These liquors may be used alone as a single type, or may also be used in any given combination of two or more types at any given ratio.

Examples of the above-described flavor include ginger flavor, garlic flavor, mustard flavor, onion flavor, sesame flavor, green onion flavor, leek flavor, Japanese basil flavor, Japanese horseradish flavor, and lemon flavor. These flavors may be used alone as a single type, or may also be used in any given combination of two or more types at any given ratio.

The above-described spicy seasoning refers to a part of a plant body (the fruit, pericarp, flower, bud, bark, stalk, leaf, seed, root, rhizome, etc., of a plant) which has a unique flavor, stimulating taste, and color tone and which is to be mixed into foods and beverages for the purpose of aromatization, deodorization, seasoning, coloration, etc., and the spicy seasoning includes spices or herbs. A spicy seasoning in which its stalk, leaf, and flower are excluded from a part to be utilized is referred to as a spice, and examples of the spice include pepper (black pepper, white pepper, and red pepper), garlic, ginger, sesame (sesame seeds), capsicum, horseradish (*Armoracia rusticana*), mustard, poppy seeds, nutmeg, cinnamon, cardamom, cumin, saffron, allspice, clove, Japanese pepper, fennel, licorice, fenugreek, Dill seed, Sichuan pepper, long pepper, and olive fruit. In addition, a spicy seasoning utilizing its stalk, leave, and flower is referred to as a herb, and examples of the herb include watercress, coriander, Japanese basil, celery, tarragon, chives, chervil, sage, thyme, laurel, leek, parsley, mustard green (*Brassica juncea*)*,* Japanese ginger, mugwort, basil, oregano, rosemary, peppermint, savory, lemon grass, dill, Japanese horseradish leaves, and Japanese pepper leaves.

The above-described spicy seasoning extract is not particularly limited, as long as it is an extract from food products, which is generally displayed as "spicy seasoning" or "spice," and examples thereof include capsicum extract, mustard extract, ginger extract, Japanese horseradish extract, pepper extract, garlic extract, onion extract, and Japanese pepper extract. These spicy seasoning extracts may be used alone as a single type, or may also be used in any given combination of two or more types at any given ratio.

Examples of the above-described viscosity adjuster include gum Arabic, alginic acid, sodium alginate, carrageenan, karaya gum, agar, locust bean gum, xanthan gum, guar gum, gellan gum, cellulose, tamarind seed gum, tara gum, tragacanth gum, pullulan, pectin, chitin, chitosan, and modified starch. These viscosity adjusters may be used alone as a single type, or may also be used in any given combination of two or more types at any given ratio.

The pH of a seasoning liquid in the liquid seasoning of the present invention is preferably 2 to 5, more preferably 2.5 to 4.5, and still more preferably 3 to 4. The pH value falling within the above-described range is preferable in maintaining food texture and enhancing fermentation feeling.

The liquid seasoning of the present invention can be used for a seasoning for hot-pots, a seasoning for noodles, a seasoning for rice, a seasoning for *Kamameshi* (Japanese rice pilaf cooked in an iron pot), a seasoning for foods dressed with a thick starchy sauce, a seasoning for grilled meats, a seasoning for daily dishes, a seasoning for *tofu,* a seasoning for Chinese fried rice, a seasoning for *tendon* (a bowl of rice topped with *tempura*), a seasoning for dumplings, a seasoning for *aemono* (sauce-dressed dishes), a seasoning for hamburger steaks, a seasoning for steaks, a seasoning for sauteed food, a seasoning for microwave cooking, a seasoning for Sundubu-jjigae, a seasoning for stir-fry, a seasoning for *Takikomi Gohan* (Japanese rice dishes seasoned and cooked with various ingredients), a seasoning for *Gomoku Gohan* (Japanese rice dishes seasoned and cooked with various ingredients), a seasoning for kimchi, a seasoning for fried food, a seasoning for ramen noodles, a seasoning for stewed dishes, a seasoning for *Shabu,* a seasoning for dip, a seasoning for pasta, a seasoning for soup, a seasoning for salads, a seasoning for sandwich, and the like. In the liquid seasoning of the present invention, preferable fermentation feeling and ripening feeling are enhanced even in the case of stewing vegetables and even if subjected to cooking with heat, and a peculiar fermenting smell and aftertaste, which cause unpleasant feeling, are not felt. Accordingly, the liquid seasoning of the present invention is useful as a seasoning for cooking with heat which is to be added during cooking with heat or as a seasoning for cooking with heat which is to be poured after cooking with heat. It is particularly preferable that the liquid seasoning of the present invention is used as a seasoning for grilled meats, a seasoning for daily dishes, a seasoning for pasta, a seasoning for Chinese fried rice, a seasoning for soup, or a seasoning for dumplings.

While the container used in the present invention is not particularly limited in terms of its material or shape as long as the container can be hermetically sealed, examples thereof include a plastic-made container, a pouch (a polyethylene pouch or an aluminum pouch), a PET bottle, a steel can, an aluminum can, and a bottle container. Among others, a wide-mouthed container is preferable because filling and removal of an ingredient and a seasoning liquid are easily performed, and a cup-shape plastic container which can be hermetically sealed by heat sealing its mouth part with a film material is more preferable so as to ensure high sealability and heat resistance.

### 2. Production method of ingredient-containing liquid seasoning in hermetically sealed container

The ingredient-containing liquid seasoning in a hermetically sealed container of the present invention can be produced by a method comprising:
(a) a step of putting a dried ingredient selected from a dried vegetable, a dried product of a fruit, seed, nut, bean, seafood, meat or processed meat product and seaweed, and a combination thereof into a container capable of being hermetically sealed so that a content of the ingredient is 10% to 80% by mass of the entire seasoning in terms of wet weight, subsequently adding a seasoning liquid including a vinegar and a lipid-containing fermented product selected from doubanjiang, gochu-jang, tianmianjiang, miso, cheese, fermented butter, anchovy, and a combination thereof, and hermetically sealing the container, wherein a long side length of the dried ingredient after swelling in the seasoning liquid is 15 to 60 mm;
(b) a step of heat treating the hermetically sealed container filled with the ingredient and the seasoning liquid at 60°C to 100°C for 20 to 120 minutes without stirring; and
(c) a step of leaving or cooling the hermetically sealed container after heat treatment until a temperature of the seasoning liquid becomes ordinary temperature.
The above-described heat treatment is performed by placing the container, which has been filled with the ingredient and the seasoning liquid and hermetically sealed, under the presence of hot air, hot water, hot water shower, steam, or the like, and no stirring is performed during the heat treatment. The heat treatment can be performed by temperature increasing heat treatment or constant-temperature heat treatment. The temperature increasing heat treatment refers to a method in which temperature is increased to a predetermined temperature, and heating is terminated when the temperature reaches the predetermined temperature, and the constant-temperature heat treatment refers to a heat treatment method in which temperature is increased to a predetermined temperature, and the temperature is maintained constant thereafter. A heating temperature is a temperature in a heating environment, and is preferably 60°C to 100°C, more preferably 65°C to 95°C, and still more preferably 70°C to 95°C. In the case of the temperature increasing heat treatment, the heat treatment time refers to a time necessary for a temperature of 60°C to reach the predetermined temperature, and in the case of the constant-temperature heat treatment, the heat treatment time refers to a total of a time necessary for a temperature of 60°C to reach the predetermined temperature and a duration time of maintaining the constant temperature. The above-described heating time may be appropriately adjusted depending on temperature but is preferably 20 to 120 minutes, more preferably 20 to 100 minutes, and still more preferably 30 to 90 minutes. In the case of the constant-temperature heat treatment, the duration time of maintaining the predetermined temperature is preferably 5 to 110 minutes, more preferably 5 to 90 minutes, and still more preferably 10 to 80 minutes, within the above-described heating time. In addition, the seasoning liquid including a vinegar and a lipid-containing fermented product can be prepared by mixing and stirring raw materials other than ingredients while heating or without heating. A temperature in the mixing is preferably 10°C to 60°C, more preferably 10°C to 50°C, still more preferably 10°C to 30°C, and especially preferably 15°C to 25°C so that fermentation feeling of the lipid-containing fermented product added to the seasoning liquid does not disperse. Mixing and stirring performed at 15°C to 25°C (room temperature) without heating is most preferable. A mixing time of the seasoning liquid may be appropriately adjusted according to temperature but is preferably 1 to 60 minutes, more preferably 3 to 30 minutes, and still more preferably 5 to 30 minutes.

### Examples

Hereinafter, the present invention will be more specifically described with examples. However, the present invention is not limited thereto.

### (Test Example 1) Studies regarding heating conditions for ingredient-containing seasoning

### (1) Preparation of test products (Examples 1 to 4 and Comparative Examples 1 to 3)

*Koikuchi* soy sauce (common salt content: 18%), sugar, sugar syrup, a brewed vinegar (acidity: 15%), and a lipid-containing fermented product [doubanjiang (lipid content: 1.8% by mass) and gochu-jang (lipid content: 1.5% by mass)] were dissolved in water according to the mixing ratios (mass%) shown in Table 1 followed by mixing and stirring (stirring condition: high speed) at ordinary temperature (15°C to 25°C) for five minutes to prepare a seasoning liquid. Dried onions were prepared by removing outer skin from onions and cutting the onions into a size having a short side length of 5 mm and a long side length of 40 mm followed by hot air drying. The dried onions were filled into a wide-mouthed cup so that the content of the onions after swelling in the seasoning liquid based on the total amount of the liquid seasoning became 55% by mass (content ratio between ingredients and lipid-containing fermented product = 22:1), the seasoning liquid was then added thereto, and the cup was sealed with a film sheet. Thereafter, for Examples 1 to 4, heating was started with steam by a high temperature heat treatment machine to increase the temperature to the corresponding temperature shown in Table 1 by 15 minutes, and then heat treatment was performed for the corresponding time period shown in Table 1 (constant temperature heat treatment). In each example, the cup was cooled with water to room temperature after heat treatment to prepare an ingredient-containing liquid seasoning in a hermetically sealed container as a test product (hermetically sealed system/without stirring). For Comparative Example 1, an ingredient-containing liquid seasoning was prepared in the same manner as in Example 2 except that a seasoning liquid was prepared by conducting mixing and stirring (stirring condition: normal) for 10 minutes until the temperature reached 90°C. For the test products of Comparative Examples 2 and 3, each ingredient-containing liquid seasoning was prepared by putting raw materials of a seasoning liquid and ingredients into a stainless-steel container followed by heat-mixing while stirring at the corresponding temperature shown in Table 1 for the corresponding time period shown in Table 1 (open system/with stirring).

### (2) Sensory evaluation test

Sensory evaluations in terms of "strength of fermentation feeling," "favorability of fermentation feeling," and "satisfaction in eating of ingredients" were carried out on each of the liquid seasonings of the test products prepared in (1). In addition, sensory evaluations in terms of "strength of fermentation feeling" and "favorability of fermentation feeling" of a meat dish cooked with heat using each of the liquid seasonings and "satisfaction in eating" of ingredients in each of the liquid seasonings when using for a meat dish, were carried out. The method of preparing a meat dish was as follows. A frying pan was preheated, and about 250 g of thinly sliced beef was heated in the frying pan over medium heat until the meat became browned. Subsequently, 210 g of the seasoning of each of the test products in a wide-mouthed cup was added to the meat and sufficiently mixed with the meat while heating over medium heat for two minutes. The "favorability of fermentation feeling" herein indicates a characteristic in flavor in which ripening feeling of the above-described "fermentation feeling," fresh sourness, and *umami* are well balanced and neither off-flavor nor pungent odor is felt. In addition, the "satisfaction in eating" of ingredients indicates a situation where food texture of ingredients is not impaired and fermentation feeling is felt from ingredients in eating.

The sensory evaluation was carried out with seven inspectors trained for the sensory evaluation in accordance with the following evaluation criteria. In calculating the score in each evaluation item, a weighted average was calculated from the evaluation scores obtained by the seven inspectors, and the obtained value was rounded off to two decimal places. A score of 2.5 points in five-point evaluation was set as a passing mark (regarded as having an effect), a score of 3 points, which was higher than 2.5 points, was regarded as having a good effect, a score of 3.5 points or higher was regarded as having a better effect, and a score of 4 points or higher was regarded as having the best effect. In addition, a test product in which a score of any one of the evaluation items was less than 2.5 points was regarded as an unacceptable product.

### <Strength of fermentation feeling>

5: Greatly strong fermentation feeling is felt
4: Strong fermentation feeling is felt
3: Fermentation feeling is felt
2: Fermentation feeling is poorly felt
1: No fermentation feeling is felt

### <Favorability of fermentation feeling>

5: Fermentation feeling is very good
4: Fermentation feeling is good
3: Fermentation feeling is somewhat good
2: Fermentation feeling is not so good (somewhat uncomfortable)
1: Fermentation feeling is poor (uncomfortable)

### <Satisfaction in eating of ingredients>

5: Very good
4: Good
3: Slightly good
2: Slightly poor
1: Poor

### (3) Test results

Sensory evaluation results of the respective test products are shown in Table 1.

**[Table 1]**

| | | Examples | | | | Comparative Example | | |
|---|---|---|---|---|---|---|---|---|
| | | 1 | 2 | 3 | 4 | 1 | 2 | 3 |
| Raw materials (mass%) | | | | | | | | |
| *Koikuchi* soy sauce | | 13.0 | 13.0 | 13.0 | 13.0 | 13.0 | 13.0 | 13.0 |
| Sugar | | 7.0 | 7.0 | 7.0 | 7.0 | 7.0 | 7.0 | 7.0 |
| Sugar syrup | | 20.0 | 20.0 | 20.0 | 20.0 | 20.0 | 20.0 | 20.0 |
| Brewed vinegar (acidity: 15%) | | 2.5 | 2.5 | 2.5 | 2.5 | 2.5 | 2.5 | 2.5 |
| Lipid-containing fermented product | Doubaniianq | 2.0 | 2.0 | 2.0 | 2.0 | 2.0 | 2.0 | 2.0 |
| | Gochu-jang | 0.5 | 0.5 | 0.5 | 0.5 | 0.5 | 0.5 | 0.5 |
| Dried onions (40mm) | | 11 | 11 | 11 | 11 | 11 | 11 | 11 |
| Water | | Appropriate amount | Appropriate amount | Appropriate amount | Appropriate amount | Appropriate amount | Appropriate amount | Appropriate amount |
| Total | | 100 | 100 | 100 | 100 | 100 | 100 | 100 |
| Seasoning liquid (containing no ingredient) preparation conditions | Mixing | High-speed stirring | High-speed stirring | High-speed stirring | High-speed stirring | Normal stirring | - | - |
| | Temperature (°C) | Without heating | Without heating | Without heating | Without heating | 90 | - | - |
| | Mixing time (minute) | 5 | 5 | 5 | 5 | 10 | - | - |
| Heating conditions of ingredient-containing seasoning | State in heating | Hermetically sealed system! without stirring | Hermetically sealed system! without stirring | Hermetically sealed system/ without stirring | Hermetically sealed system/ without stirring | Hermetically sealed system/ without stirring | Open system/ with stirring | Open system/ with stirring |
| | Temperature (°C) | 60 | 75 | 100 | 80 | 75 | 75 | 50→95 |
| | Constant temperature heating time (minute) | 10 | 10 | 10 | 3 | 10 | 10 | 10→0.5 |
| Ingredient (onion) content (mass%) | | 55 | 55 | 55 | 55 | 55 | 55 | 55 |
| Ingredient: lipid-containing fermented product (content ratio) | | 22:1 | 22:1 | 22:1 | 22:1 | 22:1 | 22:1 | 22:1 |
| Sensory evaluation results of liquid seasoning | | | | | | | | |
| Strength of fermentation feeling | | 3.7 | 4.0 | 3.9 | 3.5 | 2.6 | 2.3 | 2.3 |
| Favorability of fermentation feeling | | 4.1 | 4.0 | 3.1 | 3.4 | 2.6 | 2.3 | 2.3 |
| Satisfaction in eating of ingredients | | 4.6 | 4.4 | 4.1 | 4.3 | 3.9 | 3.7 | 3.5 |
| Sensory evaluation results of dish | | | | | | | | |
| Strength of fermentation feeling | | 3.0 | 3.3 | 3.1 | 3.7 | 2.4 | 2.7 | 2.4 |
| Favorability of fermentation feeling | | 3.9 | 4.0 | 3.6 | 3.7 | 3.0 | 2.4 | 2.9 |
| Satisfaction in eating of ingredients | | 4.1 | 4.3 | 3.8 | 4.1 | 3.6 | 2.9 | 3.3 |

As shown in Table 1, in the liquid seasonings of Examples 1 to 4, each of which was prepared by using a seasoning liquid prepared without heating and heat treating the seasoning liquid and ingredients in a hermetically sealed system without stirring, preferable fermentation feeling was sufficiently felt and satisfaction in eating of ingredients was good. In addition, preferable fermentation feeling was sufficiently felt, and satisfaction in eating of ingredients was good at the same time in the meat dish (hereinafter, referred to as "dish") cooked with heat using each of these liquid seasonings.

On the other hand, in the liquid seasoning of Comparative Example 1 which was prepared by using a seasoning liquid prepared by heating and heat treating the seasoning liquid and ingredients in a hermetically sealed system, in the liquid seasonings of Comparative Examples 2 and 3 each of which was prepared by heat treating ingredients and a seasoning liquid in an open system, and in the dish cooked with heat using each of these seasonings, preferable fermentation feeling was not sufficiently provided. In addition, in the dish cooked with heat using the liquid seasoning of Comparative Example 2, satisfaction in eating of ingredients did not reach a level regarded as being good.

### (Test Example 2) Studies regarding type of lipid-containing fermented product and content ratio between ingredients and lipid-containing fermented product

### (1) Preparation of test products (Examples 5 to 12 and Comparative Example 4)

*Koikuchi* soy sauce (common salt content: 18%), sugar, sugar syrup, a brewed vinegar (acidity: 15%), and a lipid-containing fermented product [doubanjiang (lipid content: 1.8% by mass), gochu-jang (lipid content: 1.5% by mass), *miso* (lipid content: 5.2% by mass), cheese powder (lipid content: 34% by mass)] were dissolved in water according to the mixing ratios (mass%) shown in Table 2 followed by mixing and stirring (stirring condition: high speed) at ordinary temperature to prepare a seasoning liquid. Dried onions (long side length: 40 mm) were filled into a wide-mouthed cup so that the content of the onions after swelling in the seasoning liquid based on the total amount of the liquid seasoning became 55% by mass, the seasoning liquid was then added thereto, and the cup was sealed with a film sheet. Thereafter, heating was started with steam by a high temperature heat treatment machine to increase the temperature to 75°C by 15 minutes, and heat treatment was subsequently performed at 75°C for 10 minutes to obtain an ingredient-containing liquid seasoning in a hermetically sealed container as a test product.

### (2) Sensory evaluation test

Sensory evaluations were performed on each of the test product prepared in (1) in the same manner as in Test Example 1.

### (3) Test results

Sensory evaluation results of the respective test products are shown in Table 2. In addition, the content ratio between the ingredients and the lipid-containing fermented product of each test product is also shown in Table 2.

**[Table 2]**

| | | Examples | | | | | | | | Comparative Example |
|---|---|---|---|---|---|---|---|---|---|---|
| | | 5 | 6 | 7 | 8 | 9 | 10 | 11 | 12 | 4 |
| Raw materials (mass%) | | | | | | | | | | |
| *Koikuchi* soy sauce | | 13.0 | 13.0 | 13.0 | 13.0 | 13.0 | 13.0 | 13.0 | 13.0 | 13.0 |
| Sugar | | 7.0 | 7.0 | 7.0 | 7.0 | 7.0 | 7.0 | 7.0 | 7.0 | 7.0 |
| Sugar syrup | | 20.0 | 20.0 | 20.0 | 20.0 | 20.0 | 20.0 | 20.0 | 20.0 | 20.0 |
| Brewed vinegar (acidity: 15%) | | 2.5 | 2.5 | 2.5 | 2.5 | 2.5 | 2.5 | 2.5 | 2.5 | 2.5 |
| Lipid-containing fermented product | Doubanjianq | 0.5 | 0.8 | 1.2 | 2.0 | 5.0 | 2.0 | - | - | - |
| | Gochu-janq | 0.1 | 0.2 | 0.3 | - | 1.0 | - | - | - | - |
| | *Miso* | - | - | - | - | - | 1.0 | 2.0 | 2.0 | - |
| | Cheese powder | - | - | - | - | - | - | - | 1.0 | - |
| Dried onions (40mm) | | 11 | 11 | 11 | 11 | 11 | 11 | 11 | 11 | 11 |
| Water | | Appropriate amount | Appropriate amount | Appropriate amount | Appropriate amount | Appropriate amount | Appropriate amount | Appropriate amount | Appropriate amount | Appropriate amount |
| Total | | 100 | 100 | 100 | 100 | 100 | 100 | 100 | 100 | 100 |
| Ingredient (onion) content (mass%) | | 55 | 55 | 55 | 55 | 55 | 55 | 55 | 55 | 55 |
| Ingredient: lipid-containing fermented product (content ratio) | | 92:1 | 55:1 | 37:1 | 28:1 | 9:1 | 18:1 | 28:1 | 18:1 | - |
| Sensory evaluation results of liquid seasoning | | | | | | | | | | |
| Strength of fermentation feeling | | 3.0 | 3.3 | 3.7 | 3.6 | 4.4 | 3.3 | 3.4 | 3.9 | 2.0 |
| Favorability of fermentation feeling | | 3.7 | 3.9 | 4.0 | 4.3 | 4.3 | 3.9 | 4.0 | 3.6 | 2.6 |
| Satisfaction in eating of ingredients | | 4.6 | 4.9 | 4.6 | 4.4 | 4.3 | 4.4 | 4.3 | 3.9 | 4.1 |
| Sensory evaluation results of dish | | | | | | | | | | |
| Strength of fermentation feeling | | 3.4 | 2.7 | 2.9 | 4.0 | 4.4 | 3.4 | 3.0 | 3.4 | 2.0 |
| Favorability of fermentation feeling | | 2.9 | 3.4 | 3.6 | 3.6 | 4.0 | 3.4 | 4.0 | 3.9 | 2.6 |
| Satisfaction in eating of ingredients | | 3.7 | 4.0 | 4.1 | 4.3 | 4.4 | 4.3 | 4.3 | 4.1 | 3.3 |

As shown in Table 2, in the liquid seasonings of Examples 5 to 12, in each of which doubanjiang, gochu-jang, *miso,* cheese powder, or a mixture thereof was used as a lipid-containing fermented product and a content ratio between ingredients and the lipid-containing fermented product was within a range of 95:1 to 5:1, preferable fermentation feeling was sufficiently felt and satisfaction in eating of ingredients was good. In addition, preferable fermentation feeling was sufficiently felt, and satisfaction in eating of ingredients was good at the same time in the dish cooked with heat using each of these liquid seasonings. On the other hand, in both of the liquid seasoning of Comparative Example 4, which used no lipid-containing fermented product, and the dish cooked with heat using the seasoning, preferable fermentation feeling was not sufficiently felt and satisfaction in eating of ingredients did not reach a level regarded as being good.

### (Test Example 3) Studies regarding ingredient size and ingredient type

### (1) Preparation of test products (Examples 13 to 16 and Comparative Examples 5 and 6)

*Koikuchi* soy sauce (common salt content: 18%), sugar, sugar syrup, a brewed vinegar (acidity: 15%), and a lipid-containing fermented product [doubanjiang (lipid content: 1.8%) and gochu-jang (lipid content: 1.5%)] were dissolved in water according to the mixing ratios (mass%) shown in Table 3 followed by mixing and stirring (stirring condition: high speed) at ordinary temperature to prepare a seasoning liquid. Dried onions having different long side lengths or raw onions were filled into a wide-mouthed cup so that the content of the onions after swelling in the seasoning liquid based on the total amount of the liquid seasoning became 55% by mass (content ratio between ingredients and lipid-containing fermented product = 22:1), the seasoning liquid was then added thereto, and the cup was sealed with a film sheet. Thereafter, heating was started with steam by a high temperature heat treatment machine to increase the temperature to 75°C by 15 minutes, and heat treatment was subsequently performed at 75°C for 10 minutes to obtain an ingredient-containing liquid seasoning in a hermetically sealed container as a test product.

### (2) Sensory evaluation test

Sensory evaluations were performed on each of the test products prepared in (1) in the same manner as in Test Example 1.

### (3) Test results

Sensory evaluation results of the respective test products are shown in Table 3.

**[Table 3]**

| | | Examples | | | | Comparative Example | |
|---|---|---|---|---|---|---|---|
| | | 13 | 14 | 15 | 16 | 5 | 6 |
| Raw materials (mass%) | | | | | | | |
| *Koikuchi* soy sauce | | 13.0 | 13.0 | 13.0 | 13.0 | 13.0 | 13.0 |
| Sugar | | 7.0 | 7.0 | 7.0 | 7.0 | 7.0 | 7.0 |
| Sugar syrup | | 20.0 | 20.0 | 20.0 | 20.0 | 20.0 | 20.0 |
| Brewed vinegar (acidity: 15%) | | 2.5 | 2.5 | 2.5 | 2.5 | 2.5 | 2.5 |
| Lipid-containing fermented product | Doubanjiang | 2.0 | 2.0 | 2.0 | 2.0 | 2.0 | 2.0 |
| | Gochu-jang | 0.5 | 0.5 | 0.5 | 0.5 | 0.5 | 0.5 |
| Dried onions (ingredients) | | 11 | 11 | 11 | 11 | 11 | - |
| Raw onions (ingredients) | | - | - | - | - | - | 55 |
| Water | | Appropriate amount | Appropriate amount | Appropriate amount | Appropriate amount | Appropriate amount | Appropriate amount |
| Total | | 100 | 100 | 100 | 100 | 100 | 100 |
| Ingredient size (mm) | | 4 | 15 | 30 | 60 | Less than 1 | 15 |
| Ingredient state | | Dried | Dried | Dried | Dried | Dried | Raw |
| Ingredient (onion) content (mass%) | | 55 | 55 | 55 | 55 | 55 | 55 |
| Ingredient: lipid-containing fermented product (content ratio) | | 22:1 | 22:1 | 22:1 | 22:1 | 22:1 | 22:1 |
| Sensory evaluation results of liquid seasoning | | | | | | | |
| Strength of fermentation feeling | | 3.7 | 3.6 | 3.9 | 4.0 | 3.1 | 3.3 |
| Favorability of fermentation feeling | | 4.1 | 4.3 | 3.7 | 3.7 | 3.7 | 2.4 |
| Satisfaction in eating of ingredients | | 3.4 | 4.9 | 3.9 | 3.7 | 2.1 | 3.9 |
| Sensory evaluation results of dish | | | | | | | |
| Strength of fermentation feeling | | 3.1 | 3.4 | 3.6 | 3.6 | 3.0 | 3.0 |
| Favorability of fermentation feeling | | 3.7 | 3.9 | 3.7 | 3.7 | 3.1 | 2.9 |
| Satisfaction in eating of ingredients | | 3.4 | 3.9 | 4.3 | 4.1 | 2.0 | 3.4 |

As shown in Table 3, in the liquid seasonings of Examples 13 to 16, in each of which dried ingredients having long side lengths within a range of 3 to 60 mm were used, preferable fermentation feeling was sufficiently felt and satisfaction in eating of ingredients was good. In addition, preferable fermentation feeling was sufficiently felt, and satisfaction in eating of ingredients was good at the same time in the dish cooked with heat using each of these liquid seasonings. On the other hand, in all of the liquid seasoning of Comparative Example 5 in which the long side length was less than 3 mm, the liquid seasoning of Comparative Example 6 in which raw ingredients were used, and the dish cooked with heat using each of these seasonings, preferable fermentation feeling was not sufficiently felt and satisfaction in eating of ingredients did not reach a level regarded as being good.

### (Test Example 4) Studies regarding ingredient content

### (1) Preparation of test products (Examples 17 to 22 and Comparative Example 7)

*Koikuchi* soy sauce (common salt content: 18%), sugar, sugar syrup, a brewed vinegar (acidity: 15%), and a lipid-containing fermented product [doubanjiang (lipid content: 1.8% by mass) and gochu-jang (lipid content: 1.5% by mass)] were dissolved in water according to the mixing ratios (mass%) shown in Table 4 followed by mixing and stirring (stirring condition: high speed) at ordinary temperature to prepare a seasoning liquid. Dried onions (long side length: 40 mm) were filled into a wide-mouthed cup so that the content of the onions after swelling in the seasoning liquid based on the total amount of the liquid seasoning became the corresponding content shown in Table 4, the seasoning liquid was then added thereto, and the cup was sealed with a film sheet. Thereafter, heating was started with steam by a high temperature heat treatment machine to increase the temperature to 75°C by 15 minutes, and heat treatment was subsequently performed at 75°C for 10 minutes to obtain an ingredient-containing liquid seasoning in a hermetically sealed container as a test product.

### (2) Sensory evaluation test

Sensory evaluations were performed on each of the test products prepared in (1) in the same manner as in Test Example 1.

### (3) Test results

Sensory evaluation results of the respective test products are shown in Table 4. In addition, the content ratio between the ingredients and the lipid-containing fermented product of each test product is also shown in Table 4.

**[Table 4]**

| | | Examples | | | | | | Comparative Example |
|---|---|---|---|---|---|---|---|---|
| | | 17 | 18 | 19 | 20 | 21 | 22 | 7 |
| Raw materials (mass%) | | | | | | | | |
| *Koikuchi* soy sauce | | 13.0 | 13.0 | 13.0 | 13.0 | 13.0 | 13.0 | 13.0 |
| Sugar | | 7.0 | 7.0 | 7.0 | 7.0 | 7.0 | 7.0 | 7.0 |
| Sugar syrup | | 20.0 | 20.0 | 20.0 | 20.0 | 20.0 | 20.0 | 20.0 |
| Brewed vinegar (acidity: 15%) | | 2.5 | 2.5 | 2.5 | 2.5 | 2.5 | 2.5 | 2.5 |
| Lipid-containing fermented product | | 2.0 | 2.0 | 2.0 | 2.0 | 2.0 | 2.0 | 2.0 |
| | Gochu-jang | 0.5 | 0.5 | 0.5 | 0.5 | 0.5 | 0.5 | 0.5 |
| Dried onions (40mm) | | 5 | 8 | 11 | 13 | 15 | 3 | 20 |
| Water | | Appropriate amount | Appropriate amount | Appropriate amount | Appropriate amount | Appropriate amount | Appropriate amount | Appropriate amount |
| Total | | 100 | 100 | 100 | 100 | 100 | 100 | 100 |
| Ingredient (onion) content (mass%) | | 25 | 40 | 55 | 65 | 75 | 15 | 100 |
| Ingredient: lipid-containing fermented product (content ratio) | | 10:1 | 16:1 | 22:1 | 26:1 | 30:1 | 6:1 | 40:1 |
| Sensory evaluation results of liquid seasoning | | | | | | | | |
| Strength of fermentation feeling | | 3.3 | 3.3 | 3.6 | 4.0 | 3.0 | 3.4 | 2.7 |
| Favorability of fermentation feeling | | 4.0 | 4.1 | 4.1 | 4.1 | 3.4 | 3.9 | 3.1 |
| Satisfaction in eating of ingredients | | 4.0 | 4.3 | 4.0 | 4.4 | 4.0 | 3.3 | 4.1 |
| Sensory evaluation results of dish | | | | | | | | |
| Strength of fermentation feeling | | 3.1 | 3.3 | 3.3 | 3.6 | 2.7 | 2.8 | 2.4 |
| Favorability of fermentation feeling | | 4.0 | 4.1 | 4.0 | 4.1 | 3.6 | 3.9 | 2.9 |
| Satisfaction in eating of ingredients | | 3.6 | 4.0 | 4.1 | 4.1 | 4.1 | 2.9 | 3.6 |

As shown in Table 4, in the liquid seasonings of Examples 17 to 22, in each of which the content of the ingredients after swelling in the seasoning liquid was 10% to 80% by mass based on the total amount of the liquid seasoning, preferable fermentation feeling was sufficiently felt and satisfaction in eating of ingredients was good. In addition, preferable fermentation feeling was sufficiently felt, and satisfaction in eating of ingredients was good at the same time in the dish cooked with heat using each of these liquid seasoning. On the other hand, in both of the liquid seasoning of Comparative Example 7 in which the content of the ingredients after swelling in the seasoning liquid exceeded 80% by mass based on the total amount of the liquid seasoning and the dish cooked with heat using this liquid seasoning, sufficient fermentation feeling was not felt.

### Industrial Applicability

The present invention is an ingredient-containing liquid seasoning in a hermetically sealed container, in which preferable fermentation feeling in its ingredient and entire seasoning is enhanced, food texture of the ingredient is not impaired even after cooking with heat, and satisfaction in eating of the ingredient is sufficient, and the present invention can be utilized in the field of manufacturing liquid seasonings which can be easily used in cooking with heat and the like.

## Claims

1. An ingredient-containing liquid seasoning in a hermetically sealed container, comprising:
a dried ingredient selected from a dried vegetable, a dried product of a fruit, seed, nut, bean, seafood, meat or processed meat product and seaweed, and a combination thereof;
a lipid-containing fermented product selected from doubanjiang, gochu-jang, tianmianjiang, *miso,* cheese, fermented butter, anchovy, and a combination thereof; and
a vinegar,
wherein
a content ratio between the ingredient and the lipid-containing fermented product is 95:1 to 5:1 by mass ratio,
a content of the ingredient is 10% to 80% by mass of the entire seasoning in terms of wet weight;
and
a long side length of the ingredient after swelling in a seasoning liquid is 15 to 60 mm.

2. The ingredient-containing liquid seasoning in a hermetically sealed container according to claim 1, wherein a lipid content in the lipid-containing fermented product is 1% to 80% by mass based on a total amount of the lipid-containing fermented product.

3. Use of the ingredient-containing liquid seasoning in a hermetically sealed container according to claim 1 or 2 for cooking with heat.

4. A method for producing an ingredient-containing liquid seasoning in a hermetically sealed container, the method comprising following steps:
(a) a step of putting a dried ingredient selected from a dried vegetable, a dried product of a fruit, seed, nut, bean, seafood, meat or processed meat product and seaweed, and a combination thereof into a container capable of being hermetically sealed so that a content of the ingredient is 10% to 80% by mass of the entire seasoning in terms of wet weight, subsequently adding a seasoning liquid including a vinegar and a lipid-containing fermented product selected from doubanjiang, gochu-jang, tianmianjiang, *miso,* cheese, fermented butter, anchovy, and a combination thereof, and hermetically sealing the container, wherein a long side length of the dried ingredient after swelling in the seasoning liquid is 15 to 60 mm;
(b) a step of heat treating the hermetically sealed container filled with the ingredient and the seasoning liquid at 60°C to 100°C for 20 to 120 minutes without stirring; and
(c) a step of leaving or cooling the hermetically sealed container after heat treatment until a temperature of the seasoning liquid becomes ordinary temperature.

## Patentansprüche

1. Flüssiges, einen Inhaltsstoff enthaltendes Würzmittel in einem hermetisch abgedichteten Behälter, das Folgendes umfasst:
einen trockenen Inhaltsstoff, ausgewählt aus einem getrockneten Gemüse, einem Trockenprodukt einer Frucht, einem Samen, einer Nuss, einer Bohne, einer Meeresfrucht, Fleisch oder einem verarbeitetem Fleischprodukt und Seegras sowie einer Kombination davon;
ein lipidhaltiges fermentiertes Produkt, ausgewählt aus Doubanjiang, Gochujang, Tianmianjiang, Miso, Käse, fermentierter Butter, Sardellen und einer Kombination davon; und
einem Essig,
wobei das Anteilsverhältnis zwischen dem Inhaltsstoff und dem lipidhaltigen fermentierten Produkt ein Massenverhältnis von 95:1 bis 5:1 ist;
wobei der Anteil des Inhaltsstoffs 10 bis 80 Massen-% des gesamten Würzmittels, ausgedrückt als Nassgewicht, ausmacht; und
wobei die Längsseitenlänge des Inhaltsstoffs nach Quellen in einer Würzflüssigkeit 15 bis 60 mm beträgt.

2. Flüssiges, einen Inhaltsstoff enthaltendes Würzmittel in einem hermetisch abgedichteten Behälter nach Anspruch 1, wobei der Lipidanteil im lipidhaltigen fermentierten Produkt 1 bis 80 Massen-%, bezogen auf die Gesamtmenge des lipidhaltigen fermentierten Produkts, beträgt.

3. Verwendung eines flüssigen, einen Inhaltsstoff enthaltenden Würzmittels in einem hermetisch abgedichteten Behälter nach Anspruch 1 oder 2 zum Kochen mit Hitze.

4. Verfahren zur Herstellung eines flüssigen, einen Inhaltsstoff enthaltenden Würzmittels in einem hermetisch abgedichteten Behälter, wobei das Verfahren die folgenden Schritte umfasst:
(a) einen Schritt des Einfüllens eines trockenen Inhaltsstoffs, ausgewählt aus einem getrockneten Gemüse, einem Trockenprodukt einer Frucht, einem Samen, einer Nuss, einer Bohne, einer Meeresfrucht, Fleisch oder einem verarbeitetem Fleischprodukt und Seegras sowie einer Kombination davon, in einen Behälter, der hermetisch abdichtbar ist, so dass der Anteil des Inhaltsstoffs 10 bis 80 Massen-% des gesamten Würzmittels, ausgdrückt als Nassgewicht, ausmacht, des anschließenden Zusetzens einer Würzflüssigkeit, die einen Essig und ein lipidhaltiges fermentiertes Produkt, ausgewählt aus Doubanjiang, Gochujang, Tianmianjiang, Miso, Käse, fermentierter Butter, Sardellen und einer Kombination davon umfasst, und des hermetischen Abdichtens des Behälters, wobei die Längsseitenlänge des trockenen Inhaltsstoffs nach Quellen in der Würzflüssigkeit 15 bis 60 mm beträgt;
(b) einen Schritt des 20- bis 120-minütigen Wärmebehandelns des hermetisch abgedichteten Behälters, der mit dem Inhaltsstoff und der Würzflüssigkeit befüllt ist, bei 60 °C bis 100 °C, ohne zu rühren; und
(c) einen Schritt des Ruhenlassens oder des Abkühlens des hermetisch abgedichteten Behälters nach der Wärmebehandlung, bis die Temperatur der Würzflüssigkeit Normaltemperatur erreicht.

## Revendications

1. Assaisonnement liquide contenant un ingrédient dans un récipient fermé hermétiquement, comprenant :
un ingrédient séché choisi parmi un légume séché, un produit séché d'un fruit, une graine, une noix, un haricot, un produit de la mer, une viande ou un produit de viande transformée et une algue, et une combinaison de ceux-ci ;
un produit fermenté contenant des lipides choisi parmi le doubanjiang, le gochu-jang, le tianmianjiang, le miso, le fromage, le beurre fermenté, l'anchois et une combinaison de ceux-ci ; et
du vinaigre,
dans lequel
un rapport de teneurs entre l'ingrédient et le produit fermenté contenant des lipides est de 95:1 à 5:1 en rapport massique,
une teneur de l'ingrédient est de 10 % à 80 % en masse de l'ensemble de l'assaisonnement en termes de poids humide ; et
une longueur de côté long de l'ingrédient après gonflement dans un liquide d'assaisonnement est de 15 à 60 mm.

2. Assaisonnement liquide contenant un ingrédient dans un récipient fermé hermétiquement selon la revendication 1, dans lequel une teneur en lipides dans le produit fermenté contenant des lipides est de 1 % à 80 % en masse sur la base d'une quantité totale du produit fermenté contenant des lipides.

3. Utilisation de l'assaisonnement liquide contenant un ingrédient dans un récipient fermé hermétiquement selon la revendication 1 ou 2 pour une cuisson à la chaleur.

4. Procédé de production d'un assaisonnement liquide contenant un ingrédient dans un récipient fermé hermétiquement, le procédé comprenant les étapes suivantes :
(a) une étape consistant à mettre un ingrédient séché choisi parmi un légume séché, un produit séché d'un fruit, une graine, une noix, un haricot, un produit de la mer, une viande ou un produit de viande transformée et une algue, et une combinaison de ceux-ci dans un récipient pouvant être fermé hermétiquement de sorte qu'une teneur de l'ingrédient soit de 10 % à 80 % en masse de l'ensemble de l'assaisonnement en termes de poids humide, puis à ajouter un liquide d'assaisonnement comprenant un vinaigre et un produit fermenté contenant des lipides choisi parmi le doubanjiang, le gochu-jang, le tianmianjiang, le miso, le fromage, le beurre fermenté, l'anchois, et une combinaison de ceux-ci, et à fermer hermétiquement le récipient, dans lequel une longueur de côté long de l'ingrédient séché après gonflement dans le liquide d'assaisonnement est de 15 à 60 mm ;
(b) une étape de traitement thermique du récipient fermé hermétiquement rempli de l'ingrédient et du liquide d'assaisonnement entre 60°C et 100°C pendant 20 à 120 minutes sans agitation ; et
(c) une étape consistant à laisser ou à refroidir le récipient fermé hermétiquement après le traitement thermique jusqu'à ce qu'une température du liquide d'assaisonnement devienne une température ordinaire.
